# EUROPÄISCHE PATENTSCHRIFT

(11) **EP 2 179 647 B1**
(45) Veröffentlichungstag und Bekanntmachung des Hinweises auf die Patenterteilung: **28.01.2015**
(21) Anmeldenummer: 09013273.9
(22) Anmeldetag: 21.10.2009
(51) Int. Cl.: A01M 29/12, A01N 25/34, B65D 81/28, F16L 11/127, F16L 53/00, F16L 59/14, F16L 9/12

(54) **Rohr mit Repulsivwirkstoff**
Pipe including repellent
Tuyau comprenant du répulsif

(30) Priorität: 23.10.2008 DE 202008014092 U
(43) Veröffentlichungstag der Anmeldung: 28.04.2010
(73) Patentinhaber: Rehau AG + Co, 95111 Rehau (DE)
(72) Erfinder: Kania, Guido, 91080 Marloffstein (DE)

(56) Entgegenhaltungen:
- EP-A2- 1 465 308
- EP-A2- 1 728 824
- WO-A1-99/15495
- WO-A1-99/41073
- WO-A1-2004/003423
- DE-U1-202005 004 602
- DE-U1-202007 004 596
- FR-A1- 2 785 498
- FR-A1- 2 893 696
- GB-A- 2 352 397
- GB-A- 2 442 333
- GR-A- 2001 100 474
- JP-A- 6 312 476
- JP-A- 2002 203 434
- US-A1- 2008 191 464

## Beschreibung

Die vorliegende Erfindung betrifft ein Rohr für den Transport flüssiger oder gasförmiger Medien, mit wenigstens einem Innenrohr aus einem polymeren Werkstoff und mit wenigstens einer das Innenrohr umhüllenden Außenschicht.

Isolierte Rohre zum Schutz vor dem Einfrieren der im Rohr befindlichen Medien sind allgemein bekannt. Dies sind insbesondere Rohre mit einer nachträglichen Ummantelung aus Materialien wie Steinwolle, Schaumstoff-Halbschalen oder Kunststoffschäumen, oft in Verbindung mit einem äußeren Blechmantel.

Diese üblichen Isoliermaterialen für Rohre sind jedoch nicht verbisssicher, d.h. Großtiere wie z.B. Pferde oder Kühe, aber auch Kleintiere und Nagetiere können durch Langeweile, Zerstörungswut, auf der Suche nach Futter oder aus Neugier die Isolierung beschädigen und so, insbesondere im Winter, ein Einfrieren der im Rohr befindlichen Medien verursachen. Ein äußerer Blechmantel gewährleistet zwar einen Verbissschutz der Isolierung, bzw. des Kunststoffrohres, verursacht durch die zusätzlich nötige Montagearbeit jedoch enorme Material- und Mehrkosten. Zudem verschlechtert sich in der Regel zusätzlich die Wärmedämmwirkung.

Nach dem Stand der Technik, wie z.B. in der DE 20 2007 004 596 U1 beschrieben, kann ein kostengünstiges Verbundrohr aus einem polymeren Medienrohr und einer das Medienrohr umhüllenden Wärmeisolationsschicht, die aufextrudiert ist, hergestellt werden. Ein derartiges Rohr ist in der Herstellung zwar günstiger als ein Rohr mit einem Blechmantel, verfügt allerdings über keinen Verbissschutz der Wärmeisolierunqsschicht, bzw. der außen liegenden Schicht.

Die Druckschrift GR2001100474 A beschreibt ein mehrschichtiges Rohr, welches mit Wirkstoffen versehen ist, um Nagetiere und Vögel, insbesondere Tiere, die sich an das Leben in Städten angepasst haben, vom Verbiss abzuhalten. Anwendungsschwerpunkte sind elektrische Schutzleitungen, Telekommunikations- und Lichtwellenleiterkabel und Schläuche zum Transport flüssiger oder gasförmiger Medien. Aus der Druckschrift GR2001100474A geht der Oberbegriff des Anspruchs 1 hervor.

Die Druckschrift JP06312476A beschreibt eine isolierte Leitung, welche mit Wirkstoffen versehen ist, um insbesondere Kleinnagetiere vom Verbiss abzuhalten. Anwendungsschwerpunkt bildet die Verwendung in elektrischen Produkten sowie im Bauwesen.

Die Druckschrift JP2002203434A beschreibt einen Kabelschaft, versehen mit Wirkstoffen, welche Nagetiere vom Verbiss abhalten sollen. Eine Anwendung als Kabelmantel ist offenbart.

Die Druckschrift WO 99/41073 A1betrifft ein mehrschichtiges Rohr für ein Kraftfahrzeug zur Leitung von Flüssigkeiten, die Kohlenwasserstoffverbindungen enthalten.
Dazu lehrt diese, dass eine Diffusionssperrschicht aus einem aliphatischen Keton vorgesehen sein kann, um die Wandung des Rohres undurchlässig für die Kohlenwasserstoffverbindungen zu machen.

Die Erfindung stellt sich daher die Aufgabe, ein Rohr mit den eingangs beschriebenen Merkmalen anzugeben, das gegenüber dem Stand der Technik einen wirksamen Verbissschutz und eine kostengünstige Herstellung des Rohrs aufweist.

Aus der Druckschrift GB 2 442 333 A ist bekannt, einen Baumschutz in Form eines länglichen Gegenstandes vorzusehen, der ein bioabbaubares Material und Repulsivwirkstoffe enthält.

Auch aus der Druckschrift FR 2 785 498 A1 geht ein Baumschutz hervor, der neben bioabbaubaren Material einen Repulsivwirkstoff enthält.

Erfindungsgemäß wird die Aufgabe dadurch gelöst, dass die Außenschicht die mindestens einen Repulsivwirkstoff enthält, bioabbaubare Komponenten aufweist. Ein Repulsivwirkstoff kann auch als Repellens, Repellent, Vergällungsmittel oder Vergrämungsmittel bezeichnet werden. Repulsivwirkstoffe werden üblicherweise gefährlichen Flüssigkeiten beigemischt, um Kinder und Tiere vor der versehentlichen Einnahme der Flüssigkeit zu bewahren. Rohre werden oft aus Kostengründen über dem Putz, also nicht innerhalb der Wand verlegt. Damit zum Beispiel in unbeheizten Ställen die lebensnotwendige Wasserversorgung für sogenannte Selbsttränken im Winter nicht einfriert, ist eine isolierende Außenschicht des Rohres zwingend notwendig. Wenn ein Tier an der Außenschicht kaut oder nagt, schreckt der bittere Geschmack eines Repulsivwirkstoffes das Tier ab. Aufgrund der schlechten Erfahrung kann mit der Zeit zudem ein Lerneffekt eintreten, und die Tiere vermeiden in Zukunft den Verbiss des erfindungsgemäßen Rohres. Denatoniumbenzoat wird z.B. auch als Repulsivwirkstoff für Alkohol, Lack, Reinigungsmittel oder zum Auftragen als Schutz vor dem Fingernägelkauen eingesetzt. Das Denatoniumbenzonat ist die bitterste bekannte Substanz und wirkt daher stark repulsiv, wird also aufgrund seines Geschmacks von Tieren und Menschen nicht freiwillig aufgenommen. Allgemein kann jeder Bitterstoff auch als Repulsivwirkstoff anwendbar sein, um die Wärmeisolationsschicht vor einem Verbiss zu schützen. Bitterstoffe gliedern sich im Wesentlichen unter die Stoffgruppen der Glycoside, Isoprenoide und Alkaloide. Eine weitere Möglichkeit eine repulsive, also abstoßende, bzw. vertreibende Wirkung bei Tieren oder Menschen zu erzielen, kann die Verwendung von als scharf empfundenen Wirkstoffen sein. Als Repulsivwirkstoff können daher z.B. sogenannte Capsaicinoide eingesetzt werden. Die nur bei Säugetieren wirksamen Capsaicinoide wirken auf spezifische Rezeptoren, wodurch ein unangenehmer Schärfe- bzw. Hitzereiz hervorgerufen wird. Ein Capsaicinoid, das Capsaicin findet man üblicherweise in Abwehrsprays zur Selbstverteidigung gegenüber Menschen und Tiere. Die bisher beschriebenen Repulsivwirkstoffe bedingen eine Körperaufnahme des Wirkstoffes. Daher kann es sinnvoll sein, auch Wirkstoffe einzusetzen, die über Ihren Geruch abschreckend wirken. Im Bereich der Nutztierhaltung ist dieser Ansatz aufgrund der dauerhaften Geruchsbelastung der Tiere und der Nutztierhalter ungünstig. Für die repulsive Wirkung im Freiland, oder bei im Boden verlegten Rohren, können unangenehm riechende Wirkstoffe jedoch eingesetzt werden. Beispiele für derartige Repulsivwirkstoffe können Calciumcarbid, das zur Abschreckung von Wühlmäusen und Maulwürfen eingesetzt wird, oder Substanzen die im Urin von Raubtieren enthalten sind, sein.

Neben dem Repulsivwirkstoff weist erfindungsgemäß die Außenschicht bioabbaubare Komponenten auf. Diese sogenannten bioabbaubaren Polymere zersetzen sich stetig und geben so kontinuierlich den in der Außenschicht enthaltenen Repulsivwirkstoff frei. Infolgedessen liegt vorteilhafterweise stets eine hohe Konzentration des Repulsivwirkstoffes an der Oberfläche der Außenschicht vor. Im Zuge der langsamen Verwitterung der bioab-baubaren Komponenten der Außenschicht können die in der Außenschicht enthaltenen Repulsivwirkstoffe somit stetig neu freigesetzt werden und eine optimale Wirkung entfalten.

Die Außenschicht besteht vorzugsweise aus einem Gemisch aus Repulsivwirkstoff und mindestens einer weiteren Komponente. Dadurch ist gewährleistet, dass im Vergleich zu einem lediglich an der Oberfläche aufgetragenen Repulsivwirkstoff vorteilhafterweise eine Verteilung des Wirkstoffes innerhalb der gesamten Außenschicht vorliegt. Die Verteilung kann homogen sein, kann aber auch einen Gradienten aufweisen, der von der Schichthöhe abhängt.

Als Repulsivwirkstoffe können sowohl Bitterstoffe als auch Stoffe eingesetzt werden, die einen Schärfereiz auslösen oder einen abschreckenden Geruch verbreiten. Als Beispiele seien die Verbindungen Denatoniumbenzonat (Benzyldiethyl(2,6-xylylcarbamoyl)methylammoniumbenzoat), Brucin, Calciumcarbid, Capsaicin, Piperin, Sinigrin, Isothiocyanat, Allicin, Lactucopikrin, Cynarin, Glucosinolate, Lactucin, Prämarrubiin, Marrubiin, Cucurbitacin, Aluminiumammoniumsulfat, Amarogentin, Denatoniumsaccharinat, Chinin, Chininhydrochlorid, Echinorin, Andirobin oder Kombinationen dieser Verbindungen genannt.

Die genannten Repulsivwirkstoffe können synthetisch hergestellt sein, können aber auch Extrakte aus Wermut, Engelwurz, Löwenzahn, Lattich, Gänseblümchen, Hopfen, Schafgabe, Andorn, Tausendgüldenkraut oder Kombinationen davon enthalten. Natürlich gewonnene Repulsivwirkstoffe zeichnen sich in der Regel durch eine geringe Toxizität aus und können daher insbesondere für im Boden verlegte Rohre eingesetzt werden.

Selbstverständlich ist erfindungsgemäß auch eine Kombination von synthetisch hergestellten und aus Extrakten gewonnenen, natürlichen Repulsivwirkstoffen denkbar.

Zwischen Innenrohr und Außenschicht ist mindestens erfindungsgemäß eine Zwischenschicht angeordnet . Die Zwischenschicht kann durch eine geeignete Materialauswahl für verbesserte mechanischen Eigenschaften des Rohres, wie beispielsweise erhöhte Druckfestigkeit, Zugfestigkeit, Härte, Steifigkeit, Stauchspannung, Stauchdehnung, Zug-Kriechmodul, Schlagzähigkeit, Durchstoßfestigkeit oder Biegefestigkeit genutzt werden. Vorteilhafterweise enthält auch die Zwischenschicht mindestens einen der voran genannten Repulsivwirkstoffe, so dass im Fall einer Beschädigung der Außenschicht der Verbissschutz erhalten bleibt.

Die Außenschicht und/oder die Zwischenschicht können als Wärmeisolationsschicht ausgebildet sein. Die Wärmeleitfähigkeit λ₁ der Außenschicht und/oder der Zwischenschicht ist vorzugsweise kleiner als die Wärmeleitfähigkeit λ₂ des Innenrohrs. Vorzugsweise um einen Faktor λ₁: λ₂ der im Bereich zwischen 1:2 bis 1:400 liegt. Die Wärmeleitfähigkeit, auch Wärmeleitzahl λ eines Festkörpers, einer Flüssigkeit oder eines Gases ist sein Vermögen, thermische Energie mittels Wärmeleitung in Form von Wärme zu transportieren. Die (spezifische) Wärmeleitfähigkeit in W/(K·m) ist eine temperaturabhängige Materialkonstante. Die in Bezug stehenden Wärmeleitfähigkeiten der Außenschicht und/oder der Zwischenschicht und des Innenrohres gelten daher insbesondere für Messungen bei Raumtemperatur von 20 °C.

Aufgrund der Tatsache, dass die Außenschicht und/oder die Zwischenschicht mindestens einen Repulsivwirkstoff enthalten können, kann die Wärmeisolationsschicht direkt vor dem Verbiss geschützt, und ein Einfrieren des im Rohr geführten Mediums aufgrund einer schadhaften Isolierung vermieden werden.

Die Außenschicht und/oder die Zwischenschicht kann zumindest im Wesentlichen aus einem polymeren Werkstoff bestehen. Polymere Werkstoffe weisen im Allgemeinen eine geringe Wärmeleitfähigkeit auf und lassen sich einfach und kostengünstig verarbeiten. Polymere Werkstoffe lassen sich z.B. in einfacher Weise auf das Innenrohr aufextrudieren, beispielsweise durch ein Co-Extrusionsverfahren. Zudem können vorteilhafterweise die Repulsivwirkstoffe zum Teil zusammen mit der Formmasse des polymeren Werkstoffes verarbeitet werden, so dass sich diese beispielsweise bei der Extrusion gleichmäßig über den gesamten Querschnitt der Außenschicht verteilen. Der Repulsivwirkstoff kann auch beispielsweise durch ein Tauchbad in die Außenschicht eingebracht werden.

Die Außenschicht und/oder die Zwischenschicht des erfindungsgemäßen Rohres können zumindest im Wesentlichen aus einem aufgeschäumten polymeren Werkstoff bestehen. Ein aufgeschäumter polymerer Werkstoff weist im Allgemeinen eine sehr geringe Wärmeleitfähigkeit auf und eignet sich daher besonders vorteilhaft als Material für die Wärmeisolationsschicht.

Das Innenrohr besteht in einer bevorzugten Ausführungsform der Erfindung aus einem Polyolefin, vorzugsweise aus Polypropylen, weiter vorzugsweise aus Polyethylen oder weiter vorzugsweise aus einem vernetzten Polyethylen.

An der Innenseite und/oder der Außenseite der Wandung des Innenrohrs kann vorteilhafterweise eine zusätzliche Sperrschicht angeordnet sein. Die Sperrschicht kann als Diffusionssperre für Bestandteile des Repulsivwirkstoffes, und/oder als Sperre für Substanzen der im Rohrinneren geführten Medien dienen. Insbesondere die Bitterstoffe und/oder scharf schmeckenden Wirkstoffe des Repulsivwirkstoffes können durch die Sperrschicht nicht durch das Innenrohr in das transportierte Medium, z.B. Wasser abgegeben werden und dieses verunreinigen.

Vorzugsweise handelt es sich bei der Sperrschicht um eine Ethylenvinylalkohol-Sperrschicht und/oder eine aliphatische Polyketon-Sperrschicht.

Weiter vorzugsweise kann die Sperrschicht aus einer metallischen Folie bestehen, beispielsweise aus einer Aluminiumfolie oder einer Kupferfolie, die auch aufgedampft sein können.

Vorteilhafterweise kann die metallische Folie unter Bestromung erwärmbar sein. Die metallische Folie kann in diesem Fall gleichzeitig als elektrische Widerstands-Heizfolie fungieren. Die metallische Folie weist vorzugsweise einen konstanten elektrischen Widerstand in Längs- und in Umfangsrichtung auf. Bei der Bestromung wandelt sich die am Widerstand abfallende elektrische Leistung in Wärme um, so dass die Sperrschicht gleichzeitig als Wärmequelle dient. Bei besonders tiefen Temperaturen kann, beispielsweise über einen Temperaturfühler geregelt, so ein Einfrieren des im Rohr geführten Mediums verhindert werden. Die metallische Folie kann zu diesem Zweck mit elektrisch leitenden Verbindungsstellen ausgeführt sein.

In einer weiteren Ausführungsform der Erfindung ist mindestens ein Heizband innerhalb der Außenschicht und/oder der Zwischenschicht und/oder an dem Innenrohr anliegend vorgesehen, wobei das Heizband vorzugsweise aus einer elektrisch leitfähigen Polymermasse besteht. Das Heizband kann selbstregelnd sein und kann ebenfalls bei einer Bestromung als Wärmequelle dienen, um ein Einfrieren des im Rohrinneren geführten Mediums auch bei tiefen Temperaturen zu verhindern.

Das Heizband besteht vorzugsweise aus elektrisch leitfähigem Polyethylen (PE-el), oder ist weiter vorzugsweise aus einer mit Leit-Ruß und/oder Graphit gefüllten Polymermasse gebildet. Vorteilhafterweise kann die Polymermasse kostengünstig und einfach zusammen mit den anderen Schichten des Rohres coextrudiert werden. Dies gewährleistet zudem eine feste Verbindung, und eine verbesserte Wärmeübertragung zwischen dem Heizband und der angrenzenden Außenschicht und/oder Zwischenschicht und/oder dem Innenrohr.

In einer weiteren vorteilhaften Ausführungsform der Erfindung kann die Zwischenschicht bioabbaubare Komponenten aufweisen. Die Außenschicht enthält mindestens einen Repulsivwerkstoff und weist bioabbaubare Komponenten auf. Diese sogenannten bioabbaubaren Polymere zersetzen sich stetig und geben so kontinuierlich den in der Außenschicht enthaltenen Repulsivwirkstoff frei. Infolgedessen liegt vorteilhafterweise stets eine hohe Konzentration des Repulsivwirkstoffes an der Oberfläche der Außenschicht vor. Im Zuge der langsamen Verwitterung der bioabbaubaren Komponenten der Außenschicht und/oder der Zwischenschicht können die in den Außenschicht enthaltenen Repulsivwirkstoffe somit stetig neu freigesetzt werden und eine optimale Wirkung entfalten.
Das Rohr kann in einem Extrusionsverfahren, vorzugsweise einem Co-Extrusionsverfahren hergestellt sein. Das Innenrohr, die Sperrschicht, die Zwischenschicht und die Außenschicht können dabei fest miteinander verbunden sein. Es können bei bedarf Haftvermittler eingesetzt werden, um die Haftung der einzelnen Schichten untereinander und/oder zum Innenrohr zu verbessern.

Vorzugsweise ist das erfindungsgemäße Rohr ein Fernwärmerohr, ein Lebensmitteltransportrohr, ein Heizungsrohr, ein Gasleitungsrohr oder ein Wasserleitungsrohr.

### Ausführungsbeispiele:

Im Folgenden wird die Erfindung anhand einer lediglich ein Ausführungsbeispiel darstellenden Zeichnung erläutert. Es zeigen schematisch:
- Fig. 1: einen Querschnitt durch ein nicht erfindungsgemäßes Rohr;
- Fig. 2: einen Querschnitt durch ein erfindungsgemäßes Rohr.

In den Figuren werden gleiche oder funktionsgleiche Elemente mit den gleichen Bezugszeichen versehen.

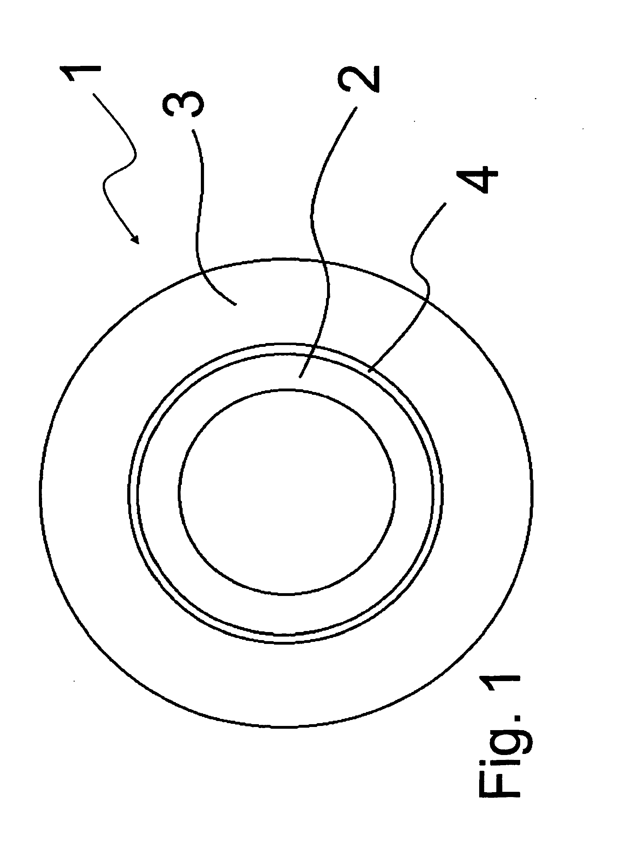

Die Figur 1 zeigt ein nicht erfindungsgemäßes Rohr 1 für den Transport flüssiger oder gasförmiger Medien mit wenigstens einem Innenrohr 2 aus einem polymeren Werkstoff und mit wenigstens einer das Innenrohr 2 vollumfänglich umhüllenden Außenschicht 3. Die Außenschicht 3 weist mindestens einen Repulsivwirkstoff und bioabbaubare Komponenten auf, der einen Verbiss der Außenschicht 3 durch Tiere verhindert. Als Repulsivwirkstoff ist in dem Ausführungsbeispiel unter anderem das stark bitter schmeckende Denatoniumbenzonat in die Außenschicht 3 eingearbeitet. Die Außenschicht 3 besteht aus einem Gemisch aus Repulsivwirkstoff und mindestens einer weiteren Komponente, so dass der Repulsivwirkstoff gleichmäßig über die gesamte Außenschicht 3 verteilt vorliegt. Die Außenschicht 3 ist als Wärmeisolationsschicht ausgebildet. Die Wärmeleitfähigkeit λ₁ der Außenschicht 3 ist um einen Faktor λ₁: λ₂, der im Bereich zwischen 1:2 bis 1:400 liegt, kleiner als die Wärmeleitfähigkeit λ₂ des Innenrohrs 2. Die Außenschicht 3 besteht zumindest im Wesentlichen aus einem aufgeschäumten polymeren Werkstoff und wird in einem Verfahrensschritt auf das Innenrohr 2 auf- bzw. coextrudiert. Das Innenrohr 2 selbst besteht aus einem vernetzten Polyethylen, vorzugsweise PE-Xa. An der Außenseite der Wandung des Innenrohres 2 ist eine zusätzliche Sperrschicht 4 angeordnet. Die Sperrschicht 4 besteht aus einer Aluminiumfolie und dient als Diffusionssperre, um die Aufnahme von Repulsivwirkstoffen durch die im Innenrohr 2 fließenden Medien zu verhindern. Der Vorteil von metallischen Folien ist, wie in diesem Ausführungsbeispiel bei der Aluminiumfolie 4, dass diese unter Bestromung er-wärmbar sind. Die metallische Folie 4 fungiert gleichzeitig als elektrische Widerstands-Heizfolie und verfügt zu diesem Zweck über nicht näher dargestellte elektrisch leitfähige Verbindungsstellen. Die gezeigte Außenschicht 3 weist bioabbaubare Komponenten auf. Das in diesem Ausführungsbeispiel gezeigte Rohr 1 dient als Wasserleitungsrohr für Viehtränken, könnte aber auch ein Fernwärmerohr, ein Lebensmitteltransportrohr, ein Heizungsrohr oder ein Gasleitungsrohr sein.

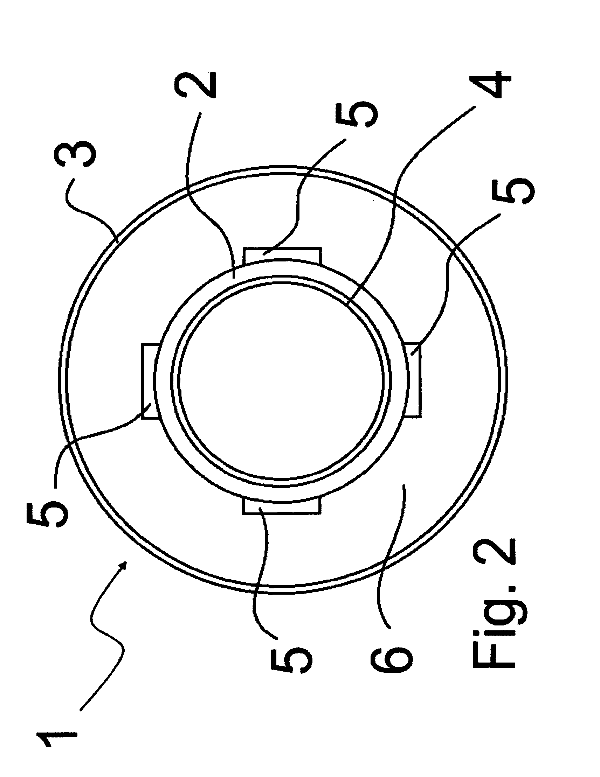

Die Figur 2 zeigt ein Rohr 1 für den Transport flüssiger oder gasförmiger Medien, mit wenigstens einem Innenrohr 2 aus einem polymeren Werkstoff und mit wenigstens einer das Innenrohr 2 vollumfänglich umhüllenden Außenschicht 3. Die Außenschicht 3 weist mindestens einen Repulsivwirkstoff und bioabbaubare Komponenten auf, der einen Verbiss der Außenschicht 3 durch Tiere verhindert. Die Außenschicht 3 besteht aus einem Gemisch aus Repulsivwirkstoff und mindestens einer weiteren Komponente, so dass der Repulsivwirkstoff gleichmäßig über die gesamte Außenschicht 3 verteilt vorliegt.

Zwischen Innenrohr 2 und Außenschicht 3 ist eine Zwischenschicht 6 angeordnet. Die Zwischenschicht 6 enthält ebenfalls mindestens einen der voran genannten Repulsivwirkstoffe, so dass im Fall einer Beschädigung der Außenschicht 3 der Verbissschutz erhalten bleibt. In diesem Ausführungsbeispiel ist die Zwischenschicht 6 als Wärmeisolationsschicht ausgebildet. Die Wärmeleitfähigkeit λ₁ der Außenschicht 3 ist um einen Faktor λ₁: λ₂, der im Bereich zwischen 1:2 bis 1:400 liegt, kleiner als die Wärmeleitfähigkeit λ₂ des Innenrohrs 2. Die Außenschicht 3 besteht zumindest im Wesentlichen aus einem polymeren Werkstoff und wird in einem Verfahrensschritt auf das Innenrohr 2 auf- bzw. coextrudiert. Der Repulsivwirkstoff wird der polymeren Formmasse zugegeben und zusammen mit dieser verarbeit, so dass sich der Repulsivwirkstoff bei der Extrusion gleichmäßig über den gesamten Querschnitt der Außenschicht 3 verteilt. Die Zwischenschicht 6 besteht im Wesentlichen aus einem aufgeschäumten polymeren Werkstoff. An der Innenseite der Wandung des Innenrohres 2 ist eine zusätzliche Sperrschicht 4 angeordnet. Die Sperrschicht 4 besteht aus einer Ethylenvinylalkohol-Sperrschicht und dient als Diffusionssperre, um die Aufnahme von Repulsivwirkstoffen durch die im Innenrohr 2 fließenden Medien zu verhindern. Innerhalb der Zwischenschicht 6, und an dem Innenrohr 2 anliegend, sind zusätzliche Heizbänder 5 vorgesehen. Die Heizbänder 5 bestehen aus einer elektrisch leitfähigen Polymermasse, die in diesem Ausführungsbeispiel aus mit Graphit gefülltem Polyethylen gebildet ist. Die elektrisch leitfähige Polymermasse 5 ist zusammen mit den weiteren Schichten 3, 4, 6 und dem Innenrohr 2 in einem Arbeitsgang coextrudiert. Das Rohr 1 ist in einem Co-Extrusionsverfahren hergestellt und das Innenrohr 2, die Sperrschicht 4, die Zwischenschicht 3 und die Außenschicht 6 sind fest miteinander verbunden.

### Bezugszeichenliste

- 1: Rohr
- 2: Innenrohr
- 3: Außenschicht
- 4: Sperrschicht / metallische Folie
- 5: Heizband / elektrisch leitfähige Polymermasse
- 6: Zwischenschicht

## Patentansprüche

1. Rohr (1) für den Transport flüssiger oder gasförmiger Medien, mit wenigstens einem Innenrohr (2) aus einem polymeren Werkstoff und mit wenigstens einer das Innenrohr (2) umhüllenden Außenschicht (3), wobei zwischen Innenrohr (2) und Außenschicht (3) mindestens eine Zwischenschicht (6) angeordnet ist und wobei die Außenschicht (3) mindestens einen Repulsivwirkstoff enthält, **dadurch gekennzeichnet, dass** die Außenschicht (3) bioabbaubare Komponenten aufweist.

2. Rohr (1) nach Anspruch 1, **dadurch gekennzeichnet, dass** die Außenschicht (3) aus einem Gemisch aus Repulsivwirkstoff und mindestens einer weiteren Komponente besteht.

3. Rohr (1) nach einem der Ansprüche 1 oder 2, **dadurch gekennzeichnet, dass** der Repulsivwirkstoff mindestens eine der folgenden Verbindungen
a) Denatoniumbenzonat (Benzyldiethyl(2,6-xylylcarbamoyl)methylammoniumbenzoat),
b) Brucin,
c) Calciumcarbid,
d) Capsaicin,
e) Piperin,
f) Sinigrin,
g) Isothiocyanat,
h) Allicin,
i) Lactucopikrin,
j) Cynarin,
k) Glucosinolate,
l) Lactucin,
m) Prämarrubiin,
n) Marrubiin,
o) Cucurbitacin,
p) Aluminiumammoniumsulfat
q) Amarogentin,
r) Denatoniumsaccharinat,
s) Chinin,
t) Chininhydrochlorid,
u) Echinorin,
v) Andirobin
oder Kombinationen davon enthält.

4. Rohr (1) nach einem der Ansprüche 1 bis 3, **dadurch gekennzeichnet, dass** der Repulsivwirkstoff mindestens einen Extrakt aus Wermut, Engelwurz, Löwenzahn, Lattich, Gänseblümchen, Hopfen, Schafgabe, Andorn, Tausendgüldenkraut oder Kombinationen davon enthält.

5. Rohr (1) nach einem der Ansprüche 1 bis 4, **dadurch gekennzeichnet, dass** die Außenschicht (3) und/oder die Zwischenschicht (6) als Wärmeisolationsschicht ausgebildet ist und die Wärmeleitfähigkeit λ₁ der Außenschicht (3) und/oder der Zwischenschicht (6) kleiner als die Wärmeleitfähigkeit λ₂ des Innenrohrs (2) ist.

6. Rohr (1) nach einem der Ansprüche 1 bis 5, **dadurch gekennzeichnet, dass** die Außenschicht (3) und/oder die Zwischenschicht (6) zumindest im Wesentlichen aus einem polymeren Werkstoff besteht.

7. Rohr (1) nach einem der Ansprüche 1 bis 6, **dadurch gekennzeichnet, dass** die Außenschicht (3) und/oder die Zwischenschicht (6) zumindest im Wesentlichen aus einem aufgeschäumten polymeren Werkstoff besteht.

8. Rohr (1) nach einem der Ansprüche 1 bis 7, **dadurch gekennzeichnet, dass** das Innenrohr (2) einem Polyolefin, beispielsweise aus Polypropylen, Polyethylen oder einem vernetzten Polyethylen besteht.

9. Rohr (1) nach einem der Ansprüche 1 bis 8, **dadurch gekennzeichnet, dass** eine zusätzliche Sperrschicht (4) an der Innenseite und/oder der Außenseite der Wandung des Innenrohrs (2) angeordnet ist.

10. Rohr (1) nach einem der Ansprüche 1 bis 9, **dadurch gekennzeichnet, dass** die Sperrschicht (4) eine Ethylenvinylalkohol-Sperrschicht und/oder eine aliphatische Polyketon-Sperrschicht ist.

11. Rohr (1) nach einem der Ansprüche 1 bis 10, **dadurch gekennzeichnet, dass** die Sperrschicht (4) aus einer metallischen Folie besteht

12. Rohr (1) nach einem der Ansprüche 1 bis 11, **dadurch gekennzeichnet, dass** mindestens ein Heizband (5) innerhalb der Außenschicht (3) und/oder der Zwischenschicht (6) und/oder an dem Innenrohr (2) anliegend vorgesehen ist, wobei das Heizband (5) vorzugsweise aus einer elektrisch leitfähigen Polymermasse besteht.

13. Rohr (1) nach einem der Ansprüche 1 bis 12, **dadurch gekennzeichnet, dass** das Rohr (1) ein Fernwärmerohr, ein Lebensmitteltransportrohr, ein Gasleitungsrohr, ein Heizungsrohr oder ein Wasserleitungsrohr ist.

## Claims

1. Pipe (1) for transport of liquid or gaseous media, having at least one inner pipe (2) of a polymeric material and having at least one outer layer (3) surrounding the inner pipe (2), at least one interlayer (6) being disposed between inner pipe (2) and outer layer (3), and the outer layer (3) comprising at least one repellent, **characterized in that** the outer layer (3) comprises biodegradable components.

2. Pipe (1) according to Claim 1, **characterized in that** the outer layer (3) consists of a mixture of repellent and at least one other component.

3. Pipe (1) according to either of Claims 1 and 2, **characterized in that** the repellent comprises at least one of the following compounds:
a) denatonium benzoate (benzyldiethyl(2,6-xylyl-carbamoyl)methylammonium benzoate),
b) brucine,
c) calcium carbide,
d) capsaicin,
e) piperine,
f) sinigrin,
g) isothiocyanate,
h) allicin,
i) lactucopicrin,
j) cynarin,
k) glucosinolates,
l) lactucin,
m) premarrubiin
n) marrubiin,
o) cucurbitacin,
p) aluminium ammonium sulphate,
q) amarogentin,
r) denatonium saccharinate,
s) quinine,
t) quinine hydrochloride,
u) echinorine,
v) andirobin
or combinations thereof.

4. Pipe (1) according to any of Claims 1 to 3, **characterized in that** the repellent comprises at least one extract from wormwood, angelica, dandelion, lettuce, daisy, hops, yarrow, horehound, centaury or combinations thereof.

5. Pipe (1) according to any of Claims 1 to 4, **characterized in that** the outer layer (3) and/or the interlayer (6) are/is in the form of a heat insulation layer and the thermal conductivity □1 of the outer layer (3) and/or of the interlayer (6) is less than the thermal conductivity □2 of the inner pipe (2).

6. Pipe (1) according to any of Claims 1 to 5, **characterized in that** the outer layer (3) and/or the interlayer (6) consist/consists at least substantially of a polymeric material.

7. Pipe (1) according to any of Claims 1 to 6, **characterized in that** the outer layer (3) and/or the interlayer (6) consist/consists at least substantially of a foamed polymeric material.

8. Pipe (1) according to any of Claims 1 to 7, **characterized in that** the inner pipe (2) consists of a polyolefin, for example polypropylene, polyethylene or a crosslinked polyethylene.

9. Pipe (1) according to any of Claims 1 to 8, **characterized in that** an additional barrier layer (4) is disposed on the inside and/or the outside of the wall of the inner pipe (2).

10. Pipe (1) according to any of Claims 1 to 9, **characterized in that** the barrier layer (4) is an ethylene-vinyl alcohol barrier layer and/or an aliphatic polyketone barrier layer.

11. Pipe (1) according to any of Claims 1 to 10, **characterized in that** the barrier layer (4) consists of a metallic foil.

12. Pipe (1) according to any of Claims 1 to 11, **characterized in that** at least one heating strip (5) is provided within the outer layer (3) and/or the interlayer (6) and/or up against the inner pipe (2), the heating strip (5) consisting preferably of an electrically conductive polymer compound.

13. Pipe (1) according to any of Claims 1 to 12, **characterized in that** the pipe (1) is a district heating pipe, a food transport pipe, a gas pipeline, a heating-system pipe or a water pipeline.

## Revendications

1. Tuyau (1) pour le transport de milieux liquides ou gazeux, comprenant au moins un tuyau intérieur (2) en un matériau polymère et au moins une couche extérieure (3) entourant le tuyau intérieur (2), au moins une couche intermédiaire (6) étant agencée entre le tuyau intérieur (2) et la couche extérieure (3) et la couche extérieure (3) contenant au moins un agent actif répulsif, **caractérisé en ce que** la couche extérieure (3) comprend des composants biodégradables.

2. Tuyau (1) selon la revendication 1, **caractérisé en ce que** la couche extérieure (3) est constituée d'un mélange d'un agent actif répulsif et d'au moins un autre composant.

3. Tuyau (1) selon l'une quelconque des revendications 1 ou 2, **caractérisé en ce que** l'agent actif répulsif contient au moins un des composés suivants :
a) le benzoate de dénatonium (benzoate de benzyldiéthyl(2,6-xylylcarbamoyl)méthylammonium),
b) la brucine,
c) le carbure de calcium,
d) la capsaïcine,
e) la pipérine,
f) la sinigrine,
g) l'isothiocyanate,
h) l'allicine,
i) la lactucopicrine,
j) la cynarine,
k) le glucosinolate,
l) la lactucine,
m) la prémarrubiine,
n) la marrubiine,
o) la cucurbitacine,
p) le sulfate d'aluminium-ammonium,
q) l'amarogentine,
r) le saccharinate de dénatonium,
s) la quinine,
t) le chlorhydrate de quinine,
u) l'échinorine,
v) l'andirobine
ou leurs combinaisons.

4. Tuyau (1) selon l'une quelconque des revendications 1 à 3, **caractérisé en ce que** l'agent actif répulsif contient au moins un extrait d'absinthe, d'angélique, de pissenlit, de laitue, de pâquerette, de houblon, d'achillée millefeuille, de marrube blanc, de petite centaurée ou leurs combinaisons.

5. Tuyau (1) selon l'une quelconque des revendications 1 à 4, **caractérisé en ce que** la couche extérieure (3) et/ou la couche intermédiaire (6) sont configurées sous la forme d'une couche d'isolation de la chaleur et la conductivité thermique λ1 de la couche extérieure (3) et/ou de la couche intermédiaire (6) est inférieure à la conductivité thermique λ2 du tuyau intérieur (2).

6. Tuyau (1) selon l'une quelconque des revendications 1 à 5, **caractérisé en ce que** la couche extérieure (3) et/ou la couche intermédiaire (6) sont au moins essentiellement constituées d'un matériau polymère.

7. Tuyau (1) selon l'une quelconque des revendications 1 à 6, **caractérisé en ce que** la couche extérieure (3) et/ou la couche intermédiaire (6) sont au moins essentiellement constituées d'un matériau polymère moussé.

8. Tuyau (1) selon l'une quelconque des revendications 1 à 7, **caractérisé en ce que** le tuyau intérieur (2) est constitué d'une polyoléfine, par exemple de polypropylène, de polyéthylène ou d'un polyéthylène réticulé.

9. Tuyau (1) selon l'une quelconque des revendications 1 à 8, **caractérisé en ce qu'**une couche de protection (4) supplémentaire est agencée sur le côté intérieur et/ou sur le côté extérieur de la paroi du tuyau intérieur (2).

10. Tuyau (1) selon l'une quelconque des revendications 1 à 9, **caractérisé en ce que** la couche de protection (4) est une couche de protection en éthylène-alcool vinylique et/ou une couche de protection en polycétone aliphatique.

11. Tuyau (1) selon l'une quelconque des revendications 1 à 10, **caractérisé en ce que** la couche de protection (4) est constitué d'un film métallique.

12. Tuyau (1) selon l'une quelconque des revendications 1 à 11, **caractérisé en ce qu'**au moins une bande chauffante (5) est prévue à l'intérieur de la couche extérieure (3) et/ou de la couche intermédiaire (6) et/ou sur le tuyau intérieur (2), la bande chauffante (5) étant de préférence constituée d'un matériau polymère électriquement conducteur.

13. Tuyau (1) selon l'une quelconque des revendications 1 à 12, **caractérisé en ce que** le tuyau (1) est un tuyau de chauffage urbain, un tuyau de transport de produits alimentaires, une conduite de gaz, un tuyau de chauffage ou une conduite d'eau.
